# EUROPEAN PATENT APPLICATION

(11) **EP 4 296 124 A1**
(43) Date of publication of application: **27.12.2023**
(21) Application number: 23175056.3
(22) Date of filing: 24.05.2023
(51) Int. Cl.: B60R 16/033, G06F 1/26, H02J 1/14, H02J 7/00

(54) **POWER DISTRIBUTION DEVICE**

(30) Priority: 21.06.2022 JP 2022099670
(71) Applicant: Alps Alpine Co., Ltd., Ota-ku, Tokyo 1458501 (JP)
(72) Inventor: Endo, Fumihito, Iwaki-city, Fukushima (JP); Sato, Tetsuo, Iwaki-city, Fukushima (JP); Shimatsu, Kenji, Iwaki-city, Fukushima (JP); Uchiyama, Mizuki, Iwaki-city, Fukushima (JP)
(74) Representative: Schmitt-Nilson Schraud Waibel Wohlfrom Patentanwälte Partnerschaft mbB

(57) **Abstract**

A USB power distribution unit according to an embodiment of the present invention has a function of distributing power supplied from a battery to a smartphone connected to a preferred port and a mobile battery connected to a non-preferred port. The USB power distribution unit includes a no-idling detection portion, an engine restart detection portion, a PD negotiation portion, and a step-up/down portion, and causes the PD negotiation portion to determine the amount of power supply to the mobile battery when a no-idling state is detected.

## Description

The present invention relates to a power distribution device for distributing power to a plurality of electronic devices connected to a plurality of respective ports and, more particularly, to power distribution supporting a no-idling function.

Various electronic devices such as a smartphone can be connected to a vehicle-mounted device and operate or are charged with power supplied from the vehicle-mounted device. On the other hand, vehicles having a no-idling function of stopping an engine during parking, stopping, or waiting at a traffic light are in practical use for energy conservation. In the case where a voltage supplied from a battery decreases when an engine is cranked to be restarted after no idling, the operation of a vehicle-mounted device charged by the battery is sometimes unstable.

JP 2015-182657 A discloses a vehicle power supply device for stepping up a voltage from a battery in a period from a no-idling state to an engine restart state. JP 2017-77847 A discloses a power supply control device including a charging current control unit for limiting a charging current for a smartphone to a value less than or equal to a predetermined value when the state of transition to no idling is detected. JP 2019-93821 A discloses a display device for preventing the voltage of an ACC power supply from decreasing to a value less than a threshold value at the time of start of an engine by supplying an electric charge stored in a capacitor.

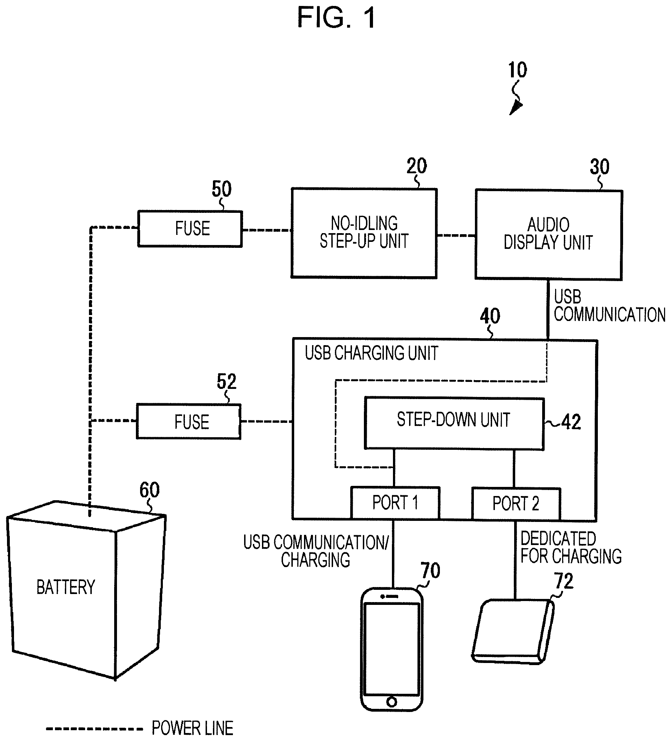

Fig. 1 is a block diagram illustrating an exemplary configuration of a vehicle-mounted device in the related art. A vehicle-mounted device 10 includes a no-idling step-up unit 20, an audio display unit 30 for reproducing audio and video, and a USB charging unit 40. The no-idling step-up unit 20 is connected to a battery 60 via a fuse 50. The USB charging unit 40 is connected to the battery 60 via a fuse 52.

The USB charging unit 40 has two ports, a port 1 and a port 2, to which respective electronic devices compatible with USB (Universal Serial Bus) (hereinafter referred to as USB compatible devices) are connected. The port 1 is a port for USB communication and charging. The USB charging unit 40 supplies a signal obtained by USB communication to, for example, the audio display unit 30 while charging a USB compatible device connected to the port 1. A signal obtained by USB communication is subjected to amplification and wave shaping in, for example, the USB charging unit 40. For example, a smartphone 70 is connected to the port 1 and can operate in cooperation with the audio display unit 30 by executing an application while being charged by the USB charging unit 40 via the port 1. The port 2 is a dedicated port for charging. The USB charging unit 40 charges a USB compatible device connected to the port 2. For example, a mobile battery 72 is connected to the port 2 and is charged by the USB charging unit 40 via the port 2.

The maximum power that the USB charging unit 40 can supply to a USB compatible device is, for example, up to a maximum of 15 W (e.g., 5 V × 3 A) via each port and 30 W in total via two ports. A battery voltage V_{BT} supplied from the battery 60 is usually approximately 12 V. The USB charging unit 40 causes a step-down unit 42 to step down the battery voltage V_{BT} to supply the voltage of, for example, 5 V from the ports 1 and 2. The battery voltage V_{BT} decreases to approximately 6 V when an engine is restarted from the no-idling state, but is stepped down by the step-down unit 42 in the case where the voltage of 5 V is supplied. The no-idling step-up unit 20 is connected to the audio display unit 30. Accordingly, even when the battery voltage V_{BT} decreases to 6 V, for example, audio reproduction is not stopped because a voltage obtained by stepping up the battery voltage V_{BT} is supplied to the audio display unit 30.

In current years, the improved functionality and performance of USB compatible devices require the USB charging unit 40 to increase the maximum power that the USB charging unit 40 can supply from the ports 1 and 2 and supply power corresponding to a USB compatible device via each port. If the maximum power that the USB charging unit 40 can supply increases to 60 W, for example, the supply of power of up to 15 W via the port 1 and the supply of power of up to 45 W via the port 2 are required or the supply of power of up to 30 W via the port 1 and the supply or power of up to 30 W via the port 2 are required.

A step-up unit is not included in the USB charging unit 40 in the related art in consideration of consumption of a large current. Accordingly, when the battery voltage V_{BT} decreases at the time of restart of an engine, a voltage higher than the decreased battery voltage V_{BT} cannot be supplied to a USB compatible device. On the other hand, in the case where a step-up unit is included in the USB charging unit 40 and a voltage obtained by stepping up the battery voltage V_{BT} is supplied to a USB compatible device, a large current flows from the battery 60 to the USB charging unit 40 when the battery voltage V_{BT} decreases and the fuse 52 may burn out.

If a current limiting circuit is provided in the USB charging unit 40 to prevent the fuse 52 from being burned out, the supply of a voltage from the USB charging unit 40 to the smartphone 70 is stopped or suppressed and the cooperative operation (e.g., CarPlay°) between the smartphone 70 and the audio display unit 30 through USB communication is forcedly terminated even though the audio display unit 30 is operable.

The fuse 52 can be prevented from being burned out at the time of restart of an engine by increasing the rated current of the fuse 52. However, in this case, the fuse 52 does not burn out at a critical time, such as at the time of a rare short-circuit. This may cause the melting of a battery harness and the occurrence of smoke.

It is an object of the present invention to provide a power distribution device capable of distributing power to a plurality of electronic devices while responding to no idling.

The invention relates to a power distribution device according to the appended claims. Embodiments are disclosed in the dependent claims.

A power distribution device according to an embodiment of the present invention includes a plurality of ports to which a plurality of respective electronic devices are connectable, a distribution unit capable of distributing power supplied from a battery to an electronic device via corresponding one of the plurality of ports, and a detection unit configured to detect a no-idling state of a vehicle. When the detection unit detects the no-idling state, the distribution unit reduces the amount of power supply to a non-preferred electronic device while maintaining the amount of power supply to a preferred electronic device.

In an aspect, a preferred electronic device is connected to a preferred port and a non-preferred electronic device is connected to a non-preferred port. In an aspect, the distribution unit includes a step-up portion configured to step up a voltage and is capable of distributing a stepped-up voltage to an electronic device at a time of no idling. In an aspect, the distribution unit is connected to the battery via a fuse and supplies to a non-preferred electronic device power with which the fuse is not burned out. In an aspect, when the no-idling state is detected, the distribution unit conducts a negotiation with a non-preferred electronic device to determine the amount of power supply to the non-preferred electronic device. In an aspect, the negotiation includes transmission of a power profile specifying selectable power and reception of a selected power profile from the non-preferred electronic device. In an aspect, the detection unit also detects a restart of an engine after the no-idling state, and, when a restart of an engine is detected after the no-idling state, the distribution unit conducts a negotiation with a non-preferred electronic device to determine the amount of power supply to the non-preferred electronic device again. In an aspect, the multiple ports are USB ports and the electronic device is a USB compatible device. In an aspect, the preferred port is a port for USB communication and charging and the non-preferred port is a dedicated port for charging. In an aspect, a preferred electronic device is a mobile terminal capable of executing an application and a preferred electronic device connected to the preferred port performs USB communication with another electronic unit connected to the power distribution device.

According to an embodiment of the present invention, the amount of power supply to a non-preferred electronic device is reduced when a no-idling state is detected while the amount of power supply to a preferred electronic device is maintained. Accordingly, even if a battery voltage decreases at the time of restart of an engine after the no-idling state, the increase in a current flowing from a battery to a power distribution device can be suppressed and the continuous operation of a preferred electronic device can be achieved.

### BRIEF DESCRIPTION OF THE DRAWINGS

Fig. 1 is a block diagram illustrating an exemplary configuration of a vehicle-mounted device in the related art;
Fig. 2 is a block diagram illustrating the configuration of a vehicle-mounted device according to an embodiment of the present invention;
Fig. 3 is a flowchart illustrating a power distribution process according to an embodiment of the present invention;
Fig. 4 is a flowchart illustrating a PD negotiation process according to an embodiment of the present invention;
Figs. 5A and 5B are diagrams illustrating examples of power profiles at the time of no idling;
Figs. 6A and 6B are diagrams illustrating examples of power profiles at the time of restart of an engine; and
Figs. 7A and 7B are diagrams illustrating an example of power distribution according to an embodiment of the present invention.

Next, embodiments of the present invention will be described. A power distribution device according to an embodiment of the present invention distributes power to a plurality of electronic devices (e.g., mobile devices) connected to a plurality of respective ports thereof while responding to no idling and is disposed in, for example, a vehicle-mounted device. In a preferred aspect, a power distribution device according to an embodiment of the present invention distributes power supplied from a battery to a plurality of USB compatible devices connected to respective USB ports and prevents the USB compatible devices from unstably operating at the time of no idling.

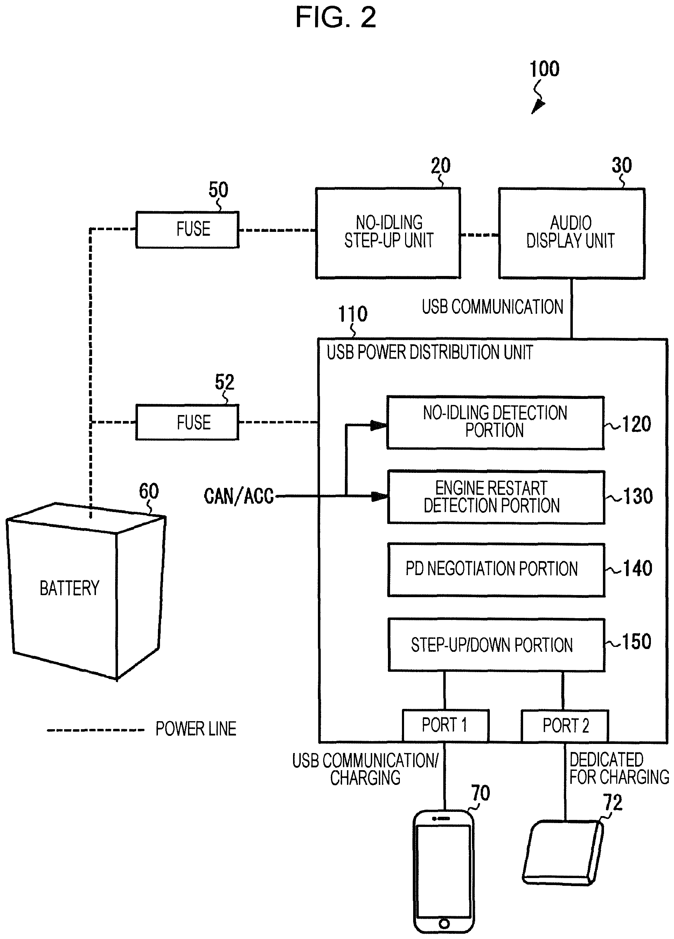

Next, an embodiment of the present invention will be described in detail. Fig. 2 is a block diagram illustrating the configuration of a vehicle-mounted device according to an embodiment of the present invention. Referring to Fig. 2, the same reference numerals are used to represent the same components in Fig. 1. A vehicle-mounted device 100 according to the present embodiment includes the no-idling step-up unit 20, the audio display unit 30, the fuses 50 and 52, the battery 60, and a USB power distribution unit 110.

The USB power distribution unit 110 includes a no-idling detection portion 120 for detecting that a vehicle has brought into a no-idling state, an engine restart detection portion 130 for detecting that an engine has restarted from the no-idling state, a power delivery (PD) negotiation portion 140 for negotiating with a USB compatible device about power distribution, a step-up/down portion 150 for stepping up or down the battery voltage V_{BT} supplied from the battery 60, the port 1 for USB communication and charging, and the port 2 dedicated for charging.

The USB power distribution unit 110 is formed by hardware and/or software, includes a microcomputer including a ROM/RAM, and controls a power distribution operation with a program installed in the microcomputer.

The port 1 is electrically connected to the audio display unit 30 via the USB power distribution unit 110, and a signal obtained by USB communication via the port 1 is subjected to amplification and wave shaping in the USB power distribution unit 110. For example, the smartphone 70 is connected to the port 1 as a USB compatible device. For example, the mobile battery 72 is connected to the port 2 as a USB compatible device.

The no-idling detection portion 120 is connected to an in-vehicle bus (e.g., control area network (CAN)) and acquires vehicle information including, for example, speed information, brake information, and parking information via the in-vehicle bus to detect that a vehicle has brought into the no-idling state. For example, when a vehicle speed decreases to a speed less than or equal to a predetermined value or becomes zero, it is detected that a vehicle has brought into the no-idling state or is being shifted to the no-idling state. It may be detected that a vehicle has brought into the no-idling state by acquiring engine information from an engine control unit (ECU) connected to an in-vehicle bus or performing engine on/off determination on the basis of an ignition (IG) signal or a TACHO signal.

In the case where the no-idling detection portion 120 detects the no-idling state, the engine restart detection portion 130 detects the restart of an engine thereafter. The engine restart detection portion 130 may detect the restart of an engine on the basis of vehicle information transmitted via an in-vehicle bus or engine information transmitted from an ECU or by performing engine on/off determination on the basis of an IG signal.

The PD negotiation portion 140 negotiates with USB compatible devices about power distribution when the USB compatible devices are connected to the port 1 and 2. For example, assuming that the maximum power that the USB power distribution unit 110 can supply is 60 W, the USB power distribution unit 110 determines the amount of power supply to USB compatible devices within the range in which the total power of the two ports 1 and 2 is 60 W (hereinafter referred to as power sharing). The PD negotiation portion 140 negotiates with USB compatible devices connected thereto via the ports 1 and 2 to determine power for power sharing.

When the connection of a USB compatible device to the port 1 or 2 is detected, the PD negotiation portion 140 transmits to the USB compatible device power profiles each specifying power that can be supplied to the USB compatible device and receives a power profile desired by the USB compatible device to determine the amount of power supply to the USB compatible device.

The distinctive feature of the present embodiment is that, when the no-idling detection portion 120 detects the no-idling state, the PD negotiation portion 140 negotiates with a non-preferred USB compatible device about power distribution to reduce the amount of power supply to the non-preferred USB compatible device. When the engine restart detection portion 130 detects that an engine has been restarted after the no-idling state, the PD negotiation portion 140 negotiates with the non-preferred USB compatible device again about power distribution to restore the amount of power supply to the non-preferred USB compatible device to an original state before the no-idling state. On the other hand, since the amount of power supply to a preferred USB compatible device is maintained during a no-idling period, the PD negotiation portion 140 does not negotiate with the preferred USB compatible device.

The discrimination between a preferred USB compatible device and a non-preferred USB compatible device is made on the basis of, for example, a function assigned to a port. The port 1 for supporting USB communication and charging and a USB compatible device (the smartphone 70) connected to the port 1 are given priorities to prevent the USB compatible device from stopping an operation performed through USB communication because of the decrease in the battery voltage V_{BT} at the time of restart of an engine after the no-idling state. Since the port 2 is a dedicated port for charging, the temporary decrease in the battery voltage V_{BT} does not pose a problem for the charging of the mobile battery 72.

The PD negotiation portion 140 makes the discrimination between a preferred USB compatible device and a non-preferred USB compatible device on the basis of a function assigned to a port, but may make the discrimination between a preferred USB compatible device and a non-preferred USB compatible device on the basis of a device ID assigned to a USB compatible device connected thereto irrespective of the function of a port in another aspect. In this case, both the ports 1 and 2 may support USB communication and charging. For example, when the mobile battery 72 is connected to the port 1 and the smartphone 70 is connected to the port 2, the PD negotiation portion 140 identifies the smartphone 70 connected to the port 2 as a preferred USB compatible device and identifies the mobile battery 72 connected to the port 1 as a non-preferred USB compatible device.

The step-up/down portion 150 steps up/down the battery voltage V_{BT} supplied from the battery 60 or power generated by a power generation system during traveling. The step-up/down portion 150 generates a voltage (e.g., 3.3 V) to be supplied to an electronic circuit such as a microcomputer in a USB power distribution unit or a voltage (e.g., 5 V, 9 V, 15 V, or 20 V) to be supplied to a USB compatible device determined by the PD negotiation portion 140. When the battery voltage V_{BT} decreases at the time of restart of an engine after the no-idling state, the step-up/down portion 150 steps up the battery voltage V_{BT} in the case where a voltage higher than the battery voltage V_{BT} needs to be supplied to a USB compatible device.

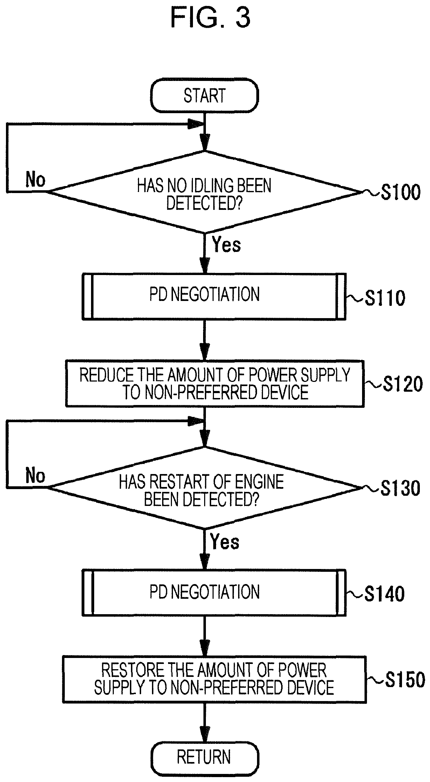

Next, the operation of the USB power distribution unit 110 according to the present embodiment will be described with reference to the flowchart illustrated in Fig. 3. The USB power distribution unit 110 can supply up to a maximum of 60 W in total via two ports. It is assumed that the USB power distribution unit 110 supplies power of 27 W (9 V × 3 A) to the smartphone 70 connected to the port 1 and supplies power of 27 W (9 V × 3 A) to the mobile battery 72 connected to the port 2 during a normal operation before the no-idling state. The smartphone 70 connected to the port 1 is a preferred USB compatible device, and the mobile battery 72 connected to the port 2 is a non-preferred USB compatible device.

When the no-idling detection portion 120 monitors the presence or absence of the no-idling state after the start of travelling of a vehicle and detects the no-idling state (S100), the PD negotiation portion 140 negotiates with the mobile battery 72 connected to the port 2 about power distribution to reduce the amount of power supply to the mobile battery 72 (S110).

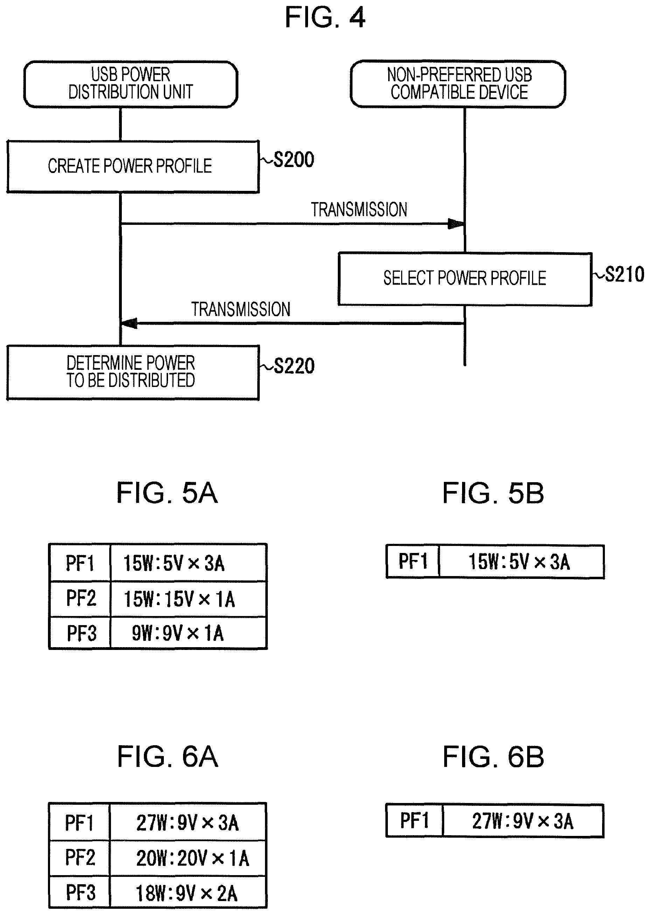

Fig. 4 illustrates a negotiation process. The PD negotiation portion 140 creates a power profile specifying power with which the fuse 52 is not burned out by a current flowing from the battery 60 to the USB power distribution unit 110 when the battery voltage V_{BT} decreases at the time of restart of an engine after the no-idling state (S200).

For example, the battery voltage V_{BT} supplied from the battery 60 is usually approximately 12 V, but decreases to approximately 6 V because of cranking at the time of restart of an engine. If the step-up/down portion 150 steps up the battery voltage V_{BT} of 6 V to 9 V and the power of 27 W is continuously supplied to the mobile battery 72, a large current flows from the battery 60 to the USB power distribution unit 110 in response to the decrease in the battery voltage V_{BT} and the fuse 52 burns out. In order to avoid this situation in the present embodiment, the negotiation with the mobile battery 72 is performed for the reduction of the amount of power supply to the mobile battery 72.

The PD negotiation portion 140 creates a single or a plurality of power profiles each specifying power using the combination of one of a plurality of selectable voltages and one of a plurality of selectable currents. The format or the like of a power profile is not particularly limited. Fig. 5A illustrates examples of power profiles. Powers specified by three power profiles PF1 to PF3 illustrated in this drawing are less than 27 W that is supplied to the mobile battery 72 during a normal operation and have respective magnitudes that prevent from the fuse 52 from being burned out.

Upon receiving power profiles from the PD negotiation portion 140 (S210), the mobile battery 72 selects a desired one of the power profiles (S210) and transmits the selected power profile to the PD negotiation portion 140. Fig. 5B illustrates an exemplary case where the mobile battery 72 selects the power profile PF1.

Upon receiving the power profile from the mobile battery 72, the PD negotiation portion 140 determines power to be distributed to the mobile battery 72 on the basis of the received power profile (S220).

Since a predetermined time (e.g., approximately 100 ms) is needed for the completion of PD negotiation, it is too late to perform PD negotiation after detecting the decrease in the battery voltage V_{BT} due to cranking at the time of restart of an engine. Accordingly, it is necessary to quickly perform PD negotiation after detecting the no-idling state.

Referring back to Fig. 3, the USB power distribution unit 110 reduces the amount of power supply to the mobile battery 72 on the basis of a result of the negotiation of the PD negotiation portion 140 (S120). Subsequently, the engine restart detection portion 130 monitors the presence or absence of the restart of an engine and detects the restart of an engine (S130). In response to this, the PD negotiation portion 140 negotiates with the mobile battery 72 again about power distribution (S140). This negotiation is performed to restore the amount of power supply to the mobile battery 72 to power during a normal operation before the no-idling state and is performed by the process in Fig. 4 like in the above case. Fig. 6A illustrates examples of power profiles created by the PD negotiation portion 140. These power profiles include the power profile PF1 during a normal operation before the no-idling state. Fig. 6B illustrates an exemplary case where the mobile battery 72 selects the power profile PF1.

The USB power distribution unit 110 restores the amount of power supply to the mobile battery 72 to original power on the basis of a result of the negotiation of the PD negotiation portion 140 (S150). On the other hand, since the amount of power supply to the smartphone 70 is maintained at power before the no-idling state, the smartphone 70 can continuously operate in cooperation with the audio display unit 30 through USB communication without being affected by the decrease in the battery voltage V_{BT} at the time of restart of an engine.

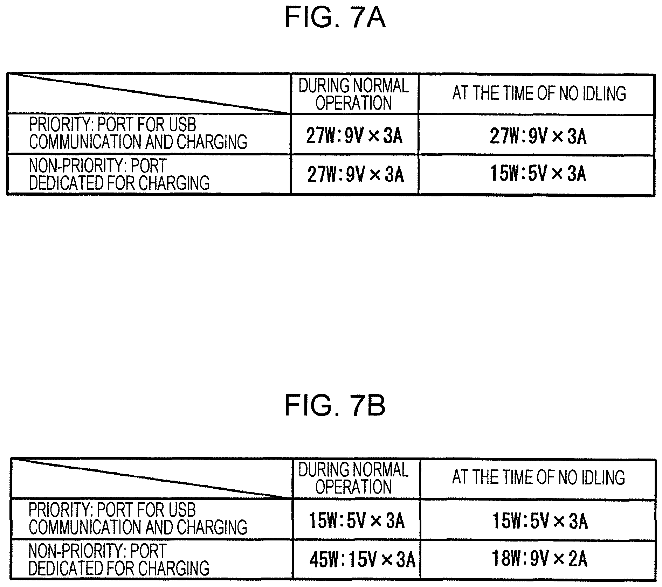

Figs. 7A and 7B each illustrate an example of power distribution. In the example illustrated in Fig. 7A, the power of 27 W is supplied to a non-preferred USB compatible device during a normal operation and the amount of power supply to the non-preferred USB compatible device is reduced to 15 W at the time of no-idling. In the example illustrated in Fig. 7B, the power of 45 W is supplied to a non-preferred USB compatible device during a normal operation and the amount of power supply to the non-preferred USB compatible device is reduced to 18 W at the time of no-idling. The amount of power supply to a preferred USB compatible device is constant without being changed at the time of no-idling.

Thus, according to the present embodiment, a fuse can be prevented from being burned out when an engine is restarted from the no-idling state. Furthermore, the cooperative operation with a preferred USB compatible device (the smartphone 70) is not stopped, thereby providing usability.

Although an exemplary case has been described in the above embodiment where power is supplied or distributed to USB compatible devices connected to respective USB ports, the present invention is not limited thereto. The present invention is applicable to the case where power is supplied or distributed to electronic devices connected to respective ports that support charging and/or communication like USB ports.

Although the configuration has been described in the above embodiment in which USB compatible devices are connected to two respective USB ports, the present invention is not limited thereto. The present invention is applicable to a configuration in which USB compatible devices are connected to three or more respective USB ports. For example, two of the three USB ports may be given priorities, remaining one of them may be given no priority, and the amount of power supply to the non-preferred USB compatible device may be reduced.

Although a preferred embodiment of the present invention has been described in detail above, the present invention is not limited to a specific embodiment, and various changes and modifications can be made thereto within the spirit of the present invention recited in the claims.

## Claims

1. A power distribution device having a function of distributing power to an electronic device, comprising:
a plurality of ports to which a plurality of respective electronic devices are connectable;
a distribution unit capable of distributing power supplied from a battery to an electronic device via corresponding one of the plurality of ports; and
a detection unit configured to detect a no-idling state of a vehicle,
wherein, when the detection unit detects the no-idling state, the distribution unit is configured to reduce the amount of power supply to a non-preferred electronic device while maintaining the amount of power supply to a preferred electronic device.

2. The power distribution device according to Claim 1, wherein a preferred electronic device is connected to a preferred port and a non-preferred electronic device is connected to a non-preferred port.

3. The power distribution device according to Claim 1 or 2, wherein the distribution unit includes a step-up portion configured to step up a voltage and is capable of distributing a stepped-up voltage to an electronic device at a time of no idling.

4. The power distribution device according to one of Claims 1 to 3, wherein the distribution unit is connected to the battery via a fuse and is configured to supply to a non-preferred electronic device power with which the fuse is not burned out.

5. The power distribution device according to one of Claims 1 to 4, wherein, when the no-idling state is detected, the distribution unit is configured to conduct a negotiation with a non-preferred electronic device to determine the amount of power supply to the non-preferred electronic device.

6. The power distribution device according to Claim 5, wherein the negotiation includes transmission of a power profile specifying selectable power and reception of a selected power profile from the non-preferred electronic device.

7. The power distribution device according to Claim 5 or 6,
wherein the detection unit also detects a restart of an engine after the no-idling state, and
wherein, when a restart of an engine is detected after the no-idling state, the distribution unit is configured to conduct a negotiation with a non-preferred electronic device to determine the amount of power supply to the non-preferred electronic device again.

8. The power distribution device according to one of Claims 1 to 7, wherein the plurality of ports are USB ports and the electronic device is a USB compatible device.

9. The power distribution device according to one of Claims 2 to 8, wherein the preferred port is a port for USB communication and charging and the non-preferred port is a dedicated port for charging.

10. The power distribution device according to Claim 9,
wherein a preferred electronic device is a mobile terminal capable of executing an application, and
wherein a preferred electronic device connected to the preferred port performs USB communication with another electronic unit connected to the power distribution device.
